# FASCICULE DE BREVET EUROPEEN

(11) **EP 2 320 290 B1**
(45) Date de publication et mention de la délivrance du brevet: **28.05.2014**
(21) Numéro de dépôt: 10189126.5
(22) Date de dépôt: 27.10.2010
(51) Int. Cl.: G05D 1/00, G05D 1/06, G01C 23/00

(54) **Jauge de vitesse relative destinée au contrôle d'un avion sans pilote**
Relativgeschwindigkeitsmesseinrichtung zur Steuerung eines unbemannten Flugzeugs
Relative speed gauge for controlling an unmanned air vehicle

(30) Priorité: 03.11.2009 FR 0905264
(43) Date de publication de la demande: 11.05.2011
(73) Titulaire: Thales, 92200 Neuilly Sur Seine (FR)
(72) Inventeur: Geoffroy, Rémi, 33600 Pessac (FR); Thiry, Yannick, 33380 Biganos (FR); Cazaux, Patrick, 33290 Le Pian Médoc (FR)
(74) Mandataire: Bréda, Jean-Marc

(56) Documents cités:
- US-A1- 2007 021 878
- US-A1- 2008 071 431
- US-B2- 6 584 382

## Description

La présente invention concerne le domaine des dispositifs de génération de données affichées dans un afficheur destinés au contrôle et à la surveillance des manoeuvres d'un aéronef à l'atterrissage. Plus particulièrement, les dispositifs de l'invention concernent la surveillance et le contrôle des aéronefs sans pilote manoeuvrant dans des phases d'appontage sur une plateforme mobile tel qu'un navire.

Généralement les missions de contrôle et de surveillance des aéronefs sans pilote peuvent être de différentes natures. Notamment, elles peuvent concerner le contrôle des phases de décollage ou d'atterrissage ou encore le contrôle du bon suivi du plan de vol lors de la navigation d'un tel aéronef.

Un opérateur dispose usuellement d'un système d'affichage lui permettant de contrôler le comportement de l'aéronef et de prendre des décisions, par exemple une décision d'annulation de mission, si besoin est.

Au cours des phases de décollage ou d'atterrissage, l'opérateur doit être réactif. En cas d'incidents, la mission doit être rapidement interrompue afin de sécuriser, dans un premier temps, le personnel à bord à proximité de la zone d'atterrissage et dans un second temps, l'appareil lui-même.

Lorsque la zone d'atterrissage ou de décollage est mobile, un inconvénient réside dans la difficulté de contrôler les manoeuvres d'un aéronef contrôlé à distance tout en garantissant une sécurité maximale aux alentours.

Typiquement, lorsque l'atterrissage a lieu sur un navire, la houle, le vent et les mouvements verticaux relatifs de l'aéronef et du navire peuvent comporter des risques dans l'exécution des manoeuvres.

La vitesse verticale de l'aéronef, lors d'un appontage par exemple, doit toujours être comparée et mesurée en regard de la vitesse verticale du navire.

Une solution actuelle consiste à afficher les deux informations précédemment introduites : la vitesse verticale absolue de l'aéronef et la vitesse verticale absolue du navire dans deux indicateurs distincts.

Un mode de réalisation de l'art antérieur propose deux afficheurs gradués qui représentent des jauges de vitesses verticales, respectivement d'un aéronef et d'un navire.

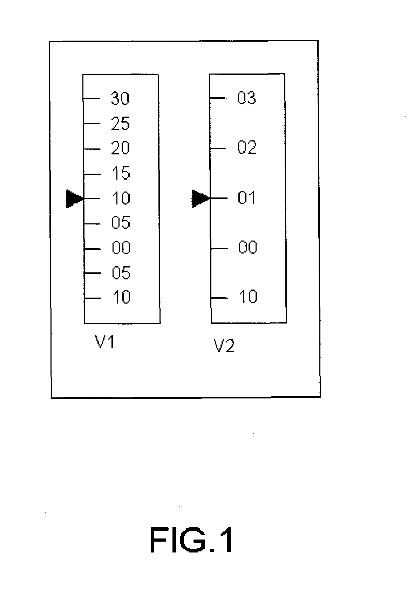

La figure 1 représente de telles jauges qui permettent à un opérateur de surveiller l'appontage d'un aéronef sur le pont du navire.

Une première jauge permet d'indiquer la vitesse verticale V1 de l'aéronef lors d'une phase d'appontage ou de préparation à l'appontage. Une seconde jauge permet d'indiquer la vitesse verticale V2 du navire.

Les vitesses de l'aéronef et du navire sont représentées dans deux indicateurs, que forment les jauges, indépendamment l'une de l'autre. Cette solution permet à un opérateur de suivre les variations des différentes vitesses. Cependant cette solution possède des inconvénients.

Tout d'abord, les informations sont représentées dans des indicateurs différents, elles sont donc difficilement simultanément contrôlables.

Ensuite cette solution ne propose qu'une surveillance indépendante des deux vitesses. Elle ne permet pas à l'opérateur d'appréhender les impacts de la dynamique du navire sur l'aéronef, surtout au moment de l'appontage lorsque l'aéronef se rapproche du pont où la moindre erreur peut constituer un danger imminent. Les deux indicateurs deviennent un inconvénient pour la surveillance car l'attention de l'opérateur doit être focalisée sur deux jauges.

En effet, lors des phases de décollage et d'appontage, l'aéronef n'évolue pas dans un repère fixe mais dans un repère mobile. La combinaison des deux vitesses influe donc sur la décision que doit prendre l'opérateur. Cette dépendance n'est pas représentée actuellement. Cela peut donc conduire à une prise de décision trop tardive par l'opérateur.

Le document US 2007/0021878 A1 décrit un dispositif connu pour apporter un aéronef sur un navire. En outre, le document US 6,584,382 B2 décrit un dispositif intuitif de controle d'un véhicule.

Un but de l'invention est de pallier les inconvénients précités.

L'invention permet d'assurer une surveillance des manoeuvres d'appontage ou d'atterrissage lorsque des informations proviennent de deux systèmes mobiles tels qu'un aéronef et un navire dont les dynamiques sont différentes.

L'invention permet de générer des indicateurs permettant une représentation des vitesses verticales absolues de l'aéronef et du navire assurant un unique point de contrôle. L'invention permet de contrôler un critère généré de manière à détecter rapidement et sans faille une valeur de vitesse pouvant menacer la mission.

Le dispositif de contrôle de vitesse destinée à un aéronef prêt à apponter sur un véhicule mobile, l'aéronef ayant une vitesse verticale courante, appelée première vitesse, le véhicule mobile ayant une vitesse verticale, appelée seconde vitesse, une première consigne étant définie, ladite consigne correspondant à la limite souhaitée de vitesse verticale en descente de l'aéronef relativement à la vitesse verticale du véhicule mobile, comprend un afficheur et des moyens de réception de données provenant de l'aéronef, notamment de sa vitesse absolue verticale.

Le dispositif comprend un calculateur permettant de générer sur l'afficheur une jauge de vitesse graduée comprenant un premier curseur fixe indiquant la valeur de la première vitesse et un second curseur mobile indiquant la valeur de la seconde vitesse, un troisième curseur mobile indiquant la première consigne, la graduation étant centrée autour de la valeur de la première vitesse verticale.

Une première zone comprise entre le second et le troisième curseur comprend un premier élément graphique remarquable permettant à un opérateur de contrôler que la première vitesse n'est pas située en dessous de ladite zone.

Avantageusement, le premier élément graphique est une couleur.

Avantageusement, une seconde zone située en dessous du troisième curseur comprend un second élément graphique remarquable.

Avantageusement, le second élément graphique est une couleur différente du premier élément graphique.

Avantageusement, un seuil haut prédéfini est généré sous forme d'un quatrième curseur dans la jauge correspondant à une vitesse limite maximale de l'aéronef.

Avantageusement, un seuil bas prédéfini est généré sous forme d'un cinquième curseur dans la jauge correspondant à une vitesse limite minimale de l'aéronef.

Avantageusement, une zone est située au delà du quatrième ou du cinquième curseur et qu'elle comporte un troisième élément graphique remarquable indiquant une zone de danger.

Avantageusement, le troisième élément graphique est une couleur.

D'autres caractéristiques et avantages de l'invention apparaîtront à l'aide de la description qui suit, faite en regard des dessins annexés qui représentent :
- a figure 1 : deux indicateurs de vitesse de l'art antérieur ;
- la figure 2 : un indicateur de la vitesse relative de l'invention entre un aéronef et un navire dans un premier cas de figure ;
- la figure 3A, 3B, 3C, 3D : quatre configurations d'un indicateur de la vitesse relative de l'invention entre un aéronef et un navire dans un second cas de figure ;
- la figure 4A, 4B, 4C, 4D : quatre configurations d'un indicateur de la vitesse relative de l'invention entre un aéronef et un navire dans un troisième cas de figure.

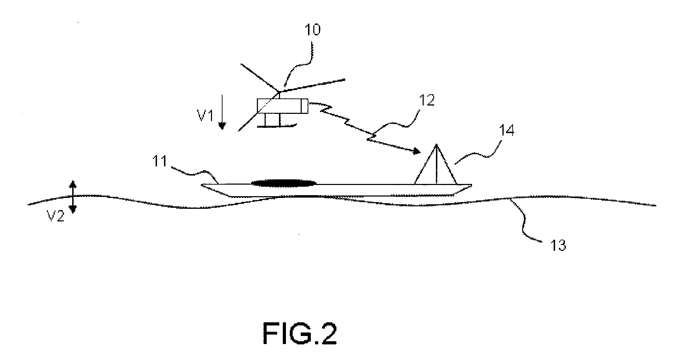

La figure 2 représente une configuration dans laquelle l'invention s'applique. ll s'agit d'un cas figure où un aéronef 10 est en position prêt à apponter sur un navire 11. La tour de contrôle 14 reçoit des informations provenant de l'aéronef 10, notamment quant à sa vitesse V1. L'opérateur doit pouvoir contrôler tout au long de la descente de l'aéronef 10 que sa vitesse verticale V1 par rapport à la vitesse verticale V2 du navire causée notamment par la houle 13 reste dans une certaine limite.

L'écart entre la vitesse verticale de l'aéronef et celle du navire doit respecter une certaine limite au-delà de laquelle des risques d'un atterrissage violent peuvent causer des dommages ou nuire à la sécurité de l'équipage du navire.

L'invention permet de contrôler dans un même indicateur que la vitesse relative de V1 par rapport à la vitesse V2 reste dans une certaine limite prédéfinie.

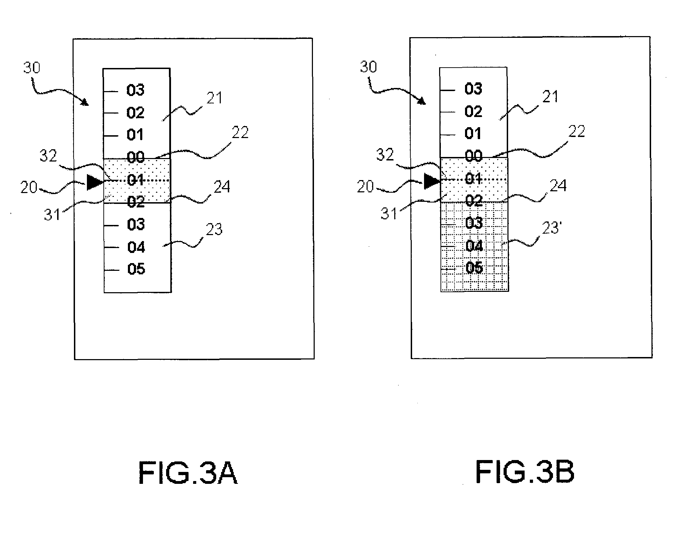

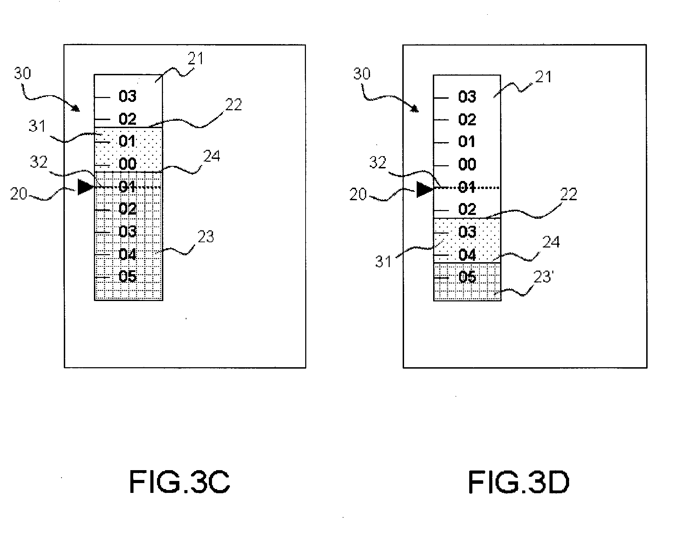

La figure 3 représente un indicateur 30 représentant une jauge graduée dont les graduations représentent des unités de vitesses. L'invention permet de générer sur un même indicateur 30 les valeurs des deux vitesses verticales, respectivement du navire et de l'aéronef de manière à pourvoir contrôler la vitesse relative verticale de l'aéronef par rapport à celle du navire.

La vitesse verticale de l'aéronef est représentée par le curseur 32, la vitesse verticale absolue du navire est représentée par le curseur 22.

Le curseur 24 représente une première consigne prédéfinie représentant la limite souhaitée de la vitesse verticale de l'aéronef relativement à la vitesse verticale du navire. ll s'agit d'un curseur représentant une donnée relative.

ll est important que l'aéronef ne possède pas une vitesse de descente trop importante pendant que le navire ait une vitesse de montée causée par la houle. Un risque d'atterrissage violent pourrait alors survenir.

Un avantage de l'invention est que le curseur représentant la vitesse verticale de l'aéronef est fixe dans l'indicateur 30. Selon la vitesse relative de l'aéronef par rapport à celle du navire, la zone 31 peut alors évoluer vers la zone 21 ou vers la zone 23.

Dans un mode de réalisation particulier, l'indicateur 30 peut représenter une délimitation telle que le curseur 24 en dessous de laquelle une zone de danger est visuellement remarquable.

La figure 3B illustre ce mode de réalisation. La zone 23' qui se trouve en dessous du curseur 24 peut comporter un code couleur ou une représentation qui permet à l'opérateur de situer rapidement la zone de danger.

Un avantage pour l'opérateur est de pouvoir disposer d'un seul indicateur 30, ce qui permet d'être réactif sur l'évolution de la vitesse relative. L'invention permet donc à un opérateur de détecter rapidement et sans erreur une valeur excessive de la vitesse verticale relative de l'aéronef 10 dans le repère mobile lié au navire 11.

Les figures 3A et 3B permettent de représenter l'indicateur 30 permettant de lire la vitesse verticale absolue de l'aéronef par l'intermédiaire du curseur 32. Dans un mode de réalisation, un symbole 20 peut comprendre un triangle pointant l'ordonnée correspondant à la vitesse verticale de l'aéronef. Ce triangle est donc fixe dans l'indicateur 30.

Un avantage de l'invention est que l'ensemble des graduations représentent une échelle mobile, qui déroule selon la vitesse de l'aéronef.

Dans ce cas, à l'intérieur de l'indicateur 30 se trouve une échelle mobile dont les graduations sont les valeurs de vitesse possibles. Cette échelle translate verticalement. La valeur de la vitesse verticale de l'aéronef est indiquée par le symbole 20 qui est aligné avec le curseur 32.

Dans l'exemple de la figure 3A, la vitesse verticale absolue de l'aéronef est de 1 m/s en descente, la vitesse verticale du navire est de 0 m/s et la première consigne est de 2m/s en descente.

La figure 3C représente l'indicateur 30 alors que l'aéronef a une vitesse verticale de 1 m/s en descente. En revanche, le navire a une vitesse verticale comprise entre 1 et 2 m/s en montée, sa vitesse étant représentée par le curseur 22.

On s'aperçoit tout de suite en lisant les informations de l'indicateur 30 que le curseur 32 représentant la vitesse verticale de l'aéronef se trouve dans la zone 23 de danger.

L'opérateur peut alors entreprendre des mesures correctives très rapidement dès lors qu'il observe une telle situation.

La figure 3D représente l'indicateur 30 alors que l'aéronef a une vitesse verticale de 1 m/s en descente. En revanche, le navire a une vitesse verticale comprise entre 2 et 3 m/s en descente, sa vitesse étant représentée par le curseur 22.

On s'aperçoit tout de suite que le curseur 32 représentant la vitesse verticale de l'aéronef est au-delà de la zone 23 de danger, l'opérateur peut par exemple entreprendre des manipulations visant à rétablir la position du curseur 20 en dessous de la vitesse verticale du navire de manière à faire atterrir l'aéronef sur le pont du navire.

Dans les modes de réalisations des figures 3A, 3B, 3C et 3D, l'écart est constant entre la vitesse absolue du navire représenté par le curseur 22 et la première consigne représentée par le curseur 24. Dans les exemples des figures 3A, 3B, 3C et 3D, cet écart est de 2m/s.

L'invention permet de configurer cet écart en fonction des missions et des contextes de vol. Cet écart représente, sur les figures 3A, 3B, C et 3D, une zone 31 correspondant à une plage de vitesses autorisée pour l'aéronef alors que la zone 23, 23' représente une plage de vitesses à priori interdite de l'aéronef.

Lorsque l'aéronef a une vitesse au delà du curseur 22, il n'est pas dans une configuration de danger. En revanche, il n'est pas dans une phase entamée de l'atterrissage. Cette plage peut correspondre à une phase de préparation à l'atterrissage.

Cette représentation permet de présenter de manière permanente la vitesse verticale de l'aéronef 32 centrée et fixe dans l'indicateur 30. Les plages de vitesses représentant un danger ou les plages de vitesses autorisées se déplacent verticalement dans l'indicateur 30. Le déplacement vertical de la graduation et donc des plages de vitesses précédemment évoquées est dépendant des vitesses absolues du navire et de l'aéronef.

L'invention permet de représenter de façon intuitive le passage de la vitesse verticale absolue de l'aéronef dans la plage de vitesse non-autorisée. Pour cela, il suffit que le curseur de vitesse absolue de l'aéronef se situe dans une zone non autorisée dont le code couleur peut être remarquable. Une alarme est alors levée.

On récapitule les différentes configurations représentées dans les figures 3A, 3B, 3C et 3D.

La configuration de la figure 3A est :
■ Vitesse verticale absolue de l'aéronef : 1 m/s en descente
■ Vitesse verticale absolue du navire : 0 m/s
■ La vitesse verticale relative acceptable limite de l'aéronef dans le repère mobile navire : 2 m/s en descente
■ Aucune alarme de vitesse n'est déclenchée

La configuration de la figure 3B est :
■ Vitesse verticale absolue de l'aéronef : 1 m/s en descente
■ Vitesse verticale absolue du navire : 0 m/s
■ La vitesse verticale relative acceptable limite de l'aéronef dans le repère mobile navire : 2 m/s en descente
■ Aucune alarme de vitesse n'est déclenchée

La configuration de la figure 3C est :
■ Vitesse verticale absolue de l'aéronef : 1 m/s en descente
■ Vitesse verticale absolue du navire : 1,7 m/s en montée
■ La vitesse verticale relative acceptable limite de l'aéronef dans le repère mobile navire : 0,3 m/s en descente
■ Une alarme de vitesse est déclenchée

La configuration de la figure 3D est :
■ Vitesse verticale absolue de l'aéronef : 1 m/s en descente
■ Vitesse verticale absolue du navire : 2.3 m/s en descente
■ La vitesse verticale relative acceptable limite de l'aéronef dans le repère mobile navire : 4.3m/s en descente
■ Aucune alarme de vitesse n'est déclenchée

Tout comme pour de nombreux paramètres de vol, la vitesse verticale de l'aéronef est limitée à un domaine de vitesses acceptables prédéfinies.

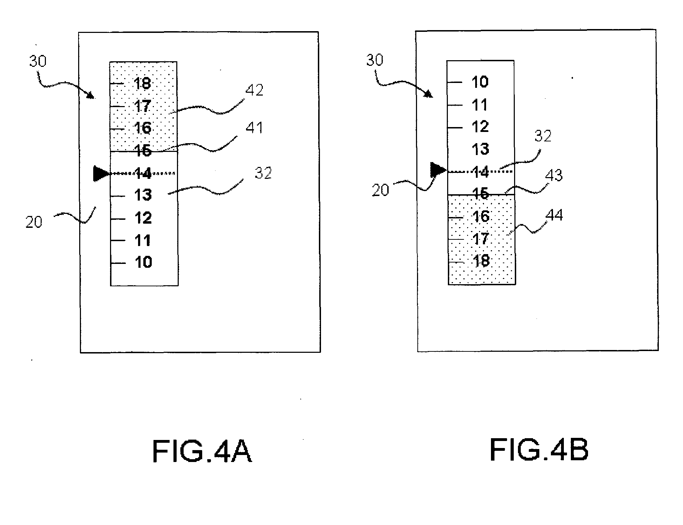

La figure 4A représente un cas de figure où la vitesse de l'aéronef est proche de la limite maximale acceptable représentée par un curseur 41.

Le curseur mobile 41 symbolise la limite maximale de la vitesse verticale absolue de l'aéronef souhaitée. Au-delà du curseur 41, la plage de vitesse définie une zone 42 dans laquelle l'aéronef encoure un risque.

La figure 4B représente un cas de figure où la vitesse de l'aéronef est proche de la limite minimale acceptable représentée par un curseur 43.

Le curseur mobile 43 symbolise la limite minimale de la vitesse verticale absolue de l'aéronef souhaitée. En dessous du curseur 43, la plage de vitesse définie une zone 44 dans laquelle l'aéronef encoure un risque.

La dynamique du repère lié au navire dans lequel évolue l'aéronef peut être représentée par l'indicateur 30. Les curseurs 41 et 43 indiquent les seuils de vitesse acceptable de la vitesse absolue de l'aéronef en montée et en descente ramenée dans le repère mobile lié au navire.

Dans l'exemple de la figure 4A, le seuil de vitesse vertical acceptable en montée de l'aéronef indique la vitesse de 15m/s en montée. Et dans l'exemple de la figure 4B, le seuil de vitesse vertical acceptable en descente de l'aéronef indique la vitesse de 15m/s en descente.

Les figures 3A, 3B, 3C et 3D ne représentent pas les valeurs limites maximale et minimale car la vitesse absolue de l'aéronef n'est pas proche de ces limites.

La génération de ces seuils 41 et 43 dans l'indicateur 30 peut être combinée à un dispositif d'alarme. Le dispositif d'alarme peut être intégré à l'indicateur par l'intermédiaire d'un code couleur permettant de différencier la zone acceptable des zones non acceptables de vitesse verticale pour l'aéronef.

A tout instant le curseur de vitesse doit se trouver à l'intérieur de la zone définie par les deux seuils 41 et 43 afin de rester dans le domaine de vol sécurisé. En cas de sortie de la zone de sécurité, une alarme est levée. Avantageusement, les zones 42 et 44 ont une couleur propre représentant une zone de danger de manière à faciliter la lecture pour un opérateur.

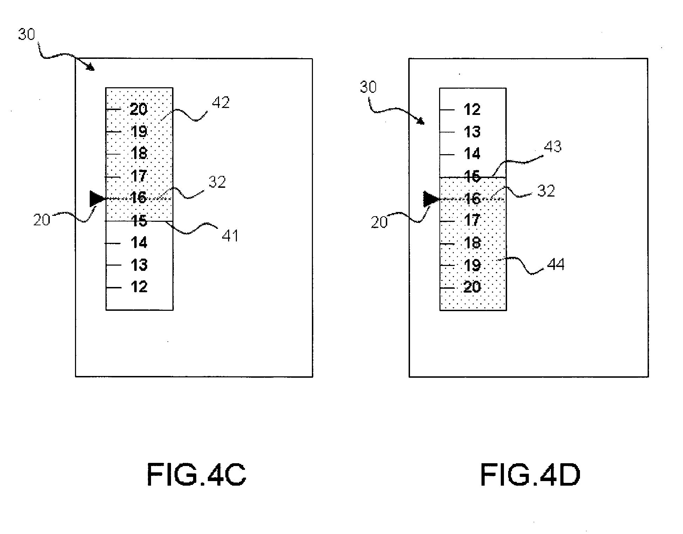

Les figures 4C et 4D représentent deux configurations où le curseur représentant la vitesse verticale de l'aéronef est dans l'une zone interdite 42, 44. Dans ces cas de figures, une alarme est levée indiquant l'imminence d'un danger.

La configuration de la figure 4A est :
■ Vitesse verticale absolue de l'aéronef : 14 m/s en montée
■ Vitesse verticale limite de l'aéronef en montée : 15m/s
■ Vitesse verticale absolue du navire : non représentée
■ La vitesse verticale relative acceptable limite de l'aéronef dans le repère mobile navire : non représentée
■ Aucune alarme de vitesse n'est déclenchée

La configuration de la figure 4B est :
■ Vitesse verticale absolue de l'aéronef : 14 m/s en descente
■ Vitesse verticale limite de l'aéronef en descente : 15m/s
■ Vitesse verticale absolue du navire : non représentée
■ La vitesse verticale relative acceptable limite de l'aéronef dans le repère mobile navire : non représentée
■ Aucune alarme de vitesse n'est déclenchée

La configuration de la figure 4C est :
■ Vitesse verticale absolue de l'aéronef : 16 m/s en montée
■ Vitesse verticale limite de l'aéronef en montée : 15m/s
■ Vitesse verticale absolue du navire : non représentée
■ La vitesse verticale relative acceptable limite de l'aéronef dans le repère mobile navire : non représentée
■ Une alarme de vitesse est déclenchée

La configuration de la figure 4D est :
■ Vitesse verticale absolue de l'aéronef : 16 m/s en descente
■ Vitesse verticale limite de l'aéronef en descente : 15m/s
■ Vitesse verticale absolue du navire : non représentée
■ La vitesse verticale relative acceptable limite de l'aéronef dans le repère mobile navire : non représentée
■ Une alarme de vitesse est déclenchée

L'invention comprend de nombreux avantages. Notamment la représentation des vitesses verticales pour l'appontage d'un aéronef sur un navire en mouvement peut être contrôlé à partir d'un unique indicateur. L'indicateur comprend différents curseurs générés et agencés de manière à faciliter l'analyse et la lecture de données sensibles.

Par ailleurs l'invention permet de générer un indicateur corrélant des premières informations de vitesse et des zones de dangers.

Enfin l'invention permet de générer des alarmes lorsque certaines vitesses limites sont franchies.

## Revendications

1. Dispositif de contrôle de vitesse destinée à un aéronef prêt à apponter sur un véhicule mobile, l'aéronef (10) ayant une vitesse verticale courante, appelée première vitesse (V1), le véhicule mobile (11) ayant une vitesse verticale, appelée seconde vitesse (V2), une première consigne étant définie, ladite consigne correspondant à la limite souhaitée de vitesse verticale en descente de l'aéronef relativement à la vitesse verticale du véhicule mobile, le dispositif comprenant un afficheur, des moyens de réception de données provenant de l'aéronef, notamment de sa vitesse absolue verticale, et un calculateur permettant de générer sur l'afficheur une jauge (30) de vitesse graduée, **caractérisé en ce que** la jauge (30) de vitesse graduée comprend un premier curseur (32) fixe indiquant la valeur de la première vitesse (V1), un second curseur (22) mobile indiquant la valeur de la seconde vitesse (V2) et un troisième curseur (24) mobile indiquant la première consigne, la graduation étant centrée autour de la valeur de la première vitesse (V1) et une première zone (31) comprise entre le second (22) et le troisième (24) curseur comprenant un premier élément graphique remarquable permettant à un opérateur de contrôler que la première vitesse (V1) n'est pas située en dessous de ladite zone.

2. Dispositif de contrôle de vitesse destinée à un aéronef prêt à apponter sur un véhicule mobile selon la revendication 1, **caractérisé en ce que** le premier élément graphique est une couleur ou un motif.

3. Dispositif de contrôle de vitesse destinée à un aéronef prêt à apponter sur un véhicule mobile selon la revendication 2, **caractérisé en ce qu'**une seconde zone (23') située en dessous du troisième curseur (24) comprend un second élément graphique remarquable.

4. Dispositif de contrôle de vitesse destinée à un aéronef prêt à apponter sur un véhicule mobile selon la revendication 3, **caractérisé en ce que** le second élément graphique est une couleur ou un motif différent du premier élément graphique.

5. Dispositif de contrôle de vitesse destinée à un aéronef prêt à apponter sur un véhicule mobile selon la revendication 1, **caractérisé en ce qu'**un seuil haut prédéfini est généré sous forme d'un quatrième curseur (41) dans la jauge (30) correspondant à une vitesse limite maximale de l'aéronef.

6. Dispositif de contrôle de vitesse destinée à un aéronef prêt à apponter sur un véhicule mobile selon la revendication 1, **caractérisé en ce qu'**un seuil bas prédéfini est généré sous forme d'un cinquième curseur (43) dans la jauge (30) correspondant à une vitesse limite minimale de l'aéronef.

7. Dispositif de contrôle de vitesse destinée à un aéronef prêt à apponter sur un véhicule mobile selon l'une quelconque des revendications 5 à 6, **caractérisé en ce qu'**une zone (42, 44) est située au delà du quatrième ou du cinquième curseur et qu'elle comporte un troisième élément graphique remarquable indiquant une zone de danger.

8. Dispositif de contrôle de vitesse destinée à un aéronef prêt à apponter sur un véhicule mobile selon la revendication 7, **caractérisé en ce que** le troisième élément graphique est une couleur ou un motif.

## Patentansprüche

1. Geschwindigkeitsregelvorrichtung für ein Luftfahrzeug, das sich auf eine Landung auf einem mobilen Fahrzeug vorbereitet, wobei das Luftfahrzeug (10) eine erste Geschwindigkeit (V1) genannte aktuelle Vertikalgeschwindigkeit hat, wobei das mobile Fahrzeug (11) eine zweite Geschwindigkeit (V2) genannte Vertikalgeschwindigkeit hat, wobei ein erster Einstellwert definiert wird, wobei der Einstellwert der gewünschten vertikalen Sinkgeschwindigkeitsgrenze des Luftfahrzeugs relativ zur Vertikalgeschwindigkeit des mobilen Fahrzeugs entspricht, wobei die Vorrichtung Folgendes umfasst: ein Display, Mittel zum Empfangen von Daten von dem Luftfahrzeug, insbesondere seine absolute Vertikalgeschwindigkeit, und einen Prozessor zum Erzeugen einer graduierten Geschwindigkeitsanzeige (30) auf dem Display, **dadurch gekennzeichnet, dass** die graduierte Geschwindigkeitsanzeige (30) einen den Wert der ersten Geschwindigkeit (V1) anzeigenden ersten festen Cursor (32), einen den Wert der zweiten Geschwindigkeit (V2) anzeigenden zweiten mobilen Cursor (22) und einen den ersten Einstellwert anzeigenden dritten mobilen Cursor (24) umfasst, wobei die Graduierung um den Wert der ersten Geschwindigkeit (V1) herum zentriert ist und eine erste Zone (31) zwischen dem zweiten (22) und dem dritten (24) Cursor ein erstes auffälliges Graphikelement umfasst, das es einem Bediener erlaubt zu prüfen, dass die erste Geschwindigkeit (V1) nicht unter der Zone liegt.

2. Geschwindigkeitsregelvorrichtung für ein sich auf eine Landung auf einem mobilen Fahrzeug vorbereitendes Luftfahrzeug nach Anspruch 1, **dadurch gekennzeichnet, dass** das erste Graphikelement eine Farbe oder ein Muster ist.

3. Geschwindigkeitsregelvorrichtung für ein sich auf eine Landung auf einem mobilen Fahrzeug vorbereitendes Luftfahrzeug nach Anspruch 2, **dadurch gekennzeichnet, dass** eine zweite Zone (23'), die sich unterhalb des dritten Cursors (24) befindet, ein zweites auffälliges Graphikelement umfasst.

4. Geschwindigkeitsregelvorrichtung für ein sich auf eine Landung auf einem mobilen Fahrzeug vorbereitendes Luftfahrzeug nach Anspruch 3, **dadurch gekennzeichnet, dass** das zweite Graphikelement eine andere Farbe oder ein anderes Muster hat als das erste Graphikelement.

5. Geschwindigkeitsregelvorrichtung für ein sich auf eine Landung auf einem mobilen Fahrzeug vorbereitendes Luftfahrzeug nach Anspruch 1, **dadurch gekennzeichnet, dass** eine vordefinierte obere Schwelle in Form eines vierten Cursors (41) in der Anzeige (30) erzeugt wird, die einer Höchstgeschwindigkeitsgrenze des Luftfahrzeugs entspricht.

6. Geschwindigkeitsregelvorrichtung für ein sich auf eine Landung auf einem mobilen Fahrzeug vorbereitendes Luftfahrzeug nach Anspruch 1, **dadurch gekennzeichnet, dass** eine vordefinierte untere Schwelle in Form eines fünften Cursors (43) in der Anzeige (30) erzeugt wird, die einer Mindestgeschwindigkeitsgrenze des Luftfahrzeugs entspricht.

7. Geschwindigkeitsregelvorrichtung für ein sich auf eine Landung auf einem mobilen Fahrzeug vorbereitendes Luftfahrzeug nach einem der Ansprüche 5 bis 6, **dadurch gekennzeichnet, dass** sich eine Zone (42, 44) jenseits des vierten oder fünften Cursors befindet, und dadurch, dass sie ein drittes auffälliges Graphikelement umfasst, das eine Gefahrenzone anzeigt.

8. Geschwindigkeitsregelvorrichtung für ein sich auf eine Landung auf einem mobilen Fahrzeug vorbereitendes Luftfahrzeug nach Anspruch 7, **dadurch gekennzeichnet, dass** das dritte Graphikelement eine Farbe oder ein Muster ist.

## Claims

1. A speed control device designed for an aircraft preparing to land on a moving vehicle, said aircraft (10) having a current vertical speed, referred to as first speed (V1), said moving vehicle (11) having a vertical speed, referred to as second speed (V2), with a first setpoint being defined, said setpoint corresponding to the desired limit of vertical descending speed of said aircraft relative to the vertical speed of said moving vehicle, said device comprising a display, means for receiving data from said aircraft, particularly its absolute vertical speed, and a computer for generating a graduated speed gauge (30) on said display, **characterised in that** said graduated speed gauge (30) comprises a first fixed cursor (32) indicating the value of said first speed (V1), a second moving cursor (22) indicating the value of said second speed (V2) and a third moving cursor (24) indicating the first setpoint, with the graduation being centred around the value of said first speed (V1), and a first zone (31) between said second (22) and said third (24) cursor comprising a first noteworthy graphic element allowing an operator to check that said first speed (V1) is not below said zone.

2. The speed control device designed for an aircraft preparing to land on a moving vehicle according to claim 1, **characterised in that** said first graphic element is a colour or a pattern.

3. The speed control device designed for an aircraft preparing to land on a moving vehicle according to claim 2, **characterised in that** a second zone (23') located below said third cursor (24) comprises a second noteworthy graphic element.

4. The speed control device designed for an aircraft preparing to land on a moving vehicle according to claim 3, **characterised in that** said second graphic element is a different colour or pattern to that of said first graphic element.

5. The speed control device designed for an aircraft preparing to land on a moving vehicle according to claim 1, **characterised in that** a predefined upper threshold is generated in the form of a fourth cursor (41) in said gauge (30), which corresponds to a maximum speed limit of said aircraft.

6. The speed control device designed for an aircraft preparing to land on a moving vehicle according to claim 1, **characterised in that** a predefined lower threshold is generated in the form of a fifth cursor (43) in said gauge (30), which corresponds to a minimum speed limit of said aircraft.

7. The speed control device designed for an aircraft preparing to land on a moving vehicle according to any one of claims 5 to 6, **characterised in that** a zone (42, 44) is located beyond said fourth or fifth cursor, and that it comprises a third noteworthy graphic element indicating a danger zone.

8. The speed control device designed for an aircraft preparing to land on a moving vehicle according to claim 7, **characterised in that** said third graphic element is a colour or a pattern.
